# EUROPEAN PATENT APPLICATION

(11) **EP 3 964 345 A1**
(43) Date of publication of application: **09.03.2022**
(21) Application number: 20206303.8
(22) Date of filing: 06.11.2020
(51) Int. Cl.: B29C 44/34, B29C 48/38, B29C 48/445

(54) **MIXING METHOD AND SYSTEM THEREOF**

(30) Priority: 02.09.2020 TW 109129971
(71) Applicant: Otrajet Inc., Taichung City 408 (TW)
(72) Inventor: YEH, LIANG-HUI, 408 TAICHUNG CITY (TW)
(74) Representative: Lang, Christian

(57) **Abstract**

A mixing method provided by the invention comprises steps of melting a solid-state polymer raw material into a flowable molten raw material fluid to flow into a mixing space at a first volume flow rate, when the raw material fluid entering the mixing space, introducing a foaming agent in a fluid form into the mixing space simultaneously or at a different time, mixing the foaming agent with the molten raw material fluid into a mixture in the mixing space, circulating the mixture in the mixing space at a second volume flow rate, and causing the second volume flow rate greater than the first volume flow rate.

## Description

### BACKGROUND OF THE INVENTION

### Field of Invention

The invention relates to high polymer processing technology, and more particularly relates to a mixing method and a system thereof for mixing a supercritical fluid as a physical foaming agent with a molten polymer fluid in a manufacturing process of polymer foamed elastomer.

### Related Art

After mixing supercritical inert gas or carbon dioxide as a foaming agent with a melted high polymer raw material fluid, and then temperature or pressure is controlled to make the foaming agent nucleate inside the polymer to form air bubbles, and resulting in a plurality of pores existing inside the formed polymer, such foaming technique is already disclosed in the field of high polymer processing technology.

In order to completely mix the foaming agent and the raw material fluid into a single-phase solution, the conventional technique uses a screw provided in an extruder that melts the solid-state raw material, the foaming agent is injected into the extruder, and then the raw material fluid and the foaming agent are stirred by using the screw to mix the foaming agent with the raw material fluid into a single-phase solution.

Since the conventional extruder is a technique to melt the high polymer raw material from a solid-state into a fluid, when the foaming agent is injected into the extruder, additional pressure will be generated on the raw material fluid inside the extruder, causing the raw material fluid to flow reversely.

In order to avoid the occurrence of backflow, the US patent 6322347 reveals a raw material fluid inside an extruder corresponding to an upstream direction of a foaming agent inlet, and check valve technology is used as a means to avoid backflow of the raw material.

However, in addition to the inconvenience of maintenance caused by the technique of combining a restricting element that prevents backflow on the screw, the additional component will also increase the difficulty of manufacturing, and also affect the operation of the screw.

### SUMMARY OF THE INVENTION

Therefore, a main object of the invention is to provide a mixing method and a system thereof to enable that when mixing a supercritical foaming agent with a molten raw material fluid, flowing of the raw material fluid is not affected, and are capable of preventing the raw material fluid from flowing reversely.

In order to achieve the above object, the mixing method provided by the invention comprises steps of melting a solid-state polymer raw material into a flowable molten raw material fluid to flow into a mixing space at a first volume flow rate, when the raw material fluid entering the mixing space, introducing a foaming agent in a fluid form into the mixing space simultaneously or at a different time, mixing the foaming agent with the molten raw material fluid into a mixture in the mixing space, circulating the mixture in the mixing space at a second volume flow rate, and causing the second volume flow rate greater than the first volume flow rate. Thereby, during a process of the raw material fluid flowing toward the mixing space, flowing of the raw material fluid can be continuously or intermittently performed in one direction through an environment or conditions of flowing in the mixing space at a greater volume flow rate to achieve an efficacy of preventing backflow.

The mixing system provided by the invention includes a first flow path that allows a fluid to flow at a first volume flow rate, and a second flow path that allows the fluid to flow at a second volume flow rate, the second volume flow rate is made to be greater than the first volume flow rate; thereby a solid-state polymer raw material is melted into a flowable molten raw material fluid in the first flow path, and the molten raw material fluid leaves the first flow path and enters the second flow path at the first volume flow rate, a foaming agent fluid is introduced into the second flow path simultaneously or at a different time, so that the molten raw material fluid and the foaming agent are mixed to form a mixture, and the mixture is made to flow in the second flow path at the second volume flow rate.

In order to form the first flow path, the mixing system further includes a first tube and a first screw, wherein the first screw is inserted into the first tube coaxially and is capable of rotating with its own shaft as a spin axis, and forming the first flow path with a space between a peripheral side of the first screw and an inner wall of the first tube.

Relatively, in order to form the second flow path, the mixing system includes a second tube and a second screw, wherein the second screw is inserted into the second tube coaxially and is capable of rotating with its own shaft as a spin axis, and forming the second flow path with a space between a peripheral side of the second screw and an inner wall of the second tube.

In specific configuration of the flow path, in order to achieve differentiation of the volume flow rate, a cross-sectional area of the flow path can be changed by means of changing an inner diameter of the tube, a diameter of the screw, a pitch of the screw, a screw thread depth, a screw thread angle or a screw thread thickness, or differentiation of the volume flow rate can be achieved with different screw rotation speeds under a same or different cross-sectional area of the flow path.

### BRIEF DESCRIPTION OF THE DRAWINGS

In order to enable the examiner to further understand the objects, features, and achieved efficacies of the invention, preferred embodiments are listed below for detailed explanation in conjunction with the drawings, wherein:
FIG. 1 is a perspective view of a preferred embodiment of the invention;
FIG. 2 is a partial cross-sectional view of a preferred embodiment of the invention taken along section line 2-2 in FIG. 1;
FIG. 3 is a perspective view of another preferred embodiment of the invention; and
FIG. 4 is a partial cross-sectional view of another preferred embodiment of the invention taken along section line 4-4 in FIG. 3.

### DETAILED DESCRIPTION OF THE INVENTION

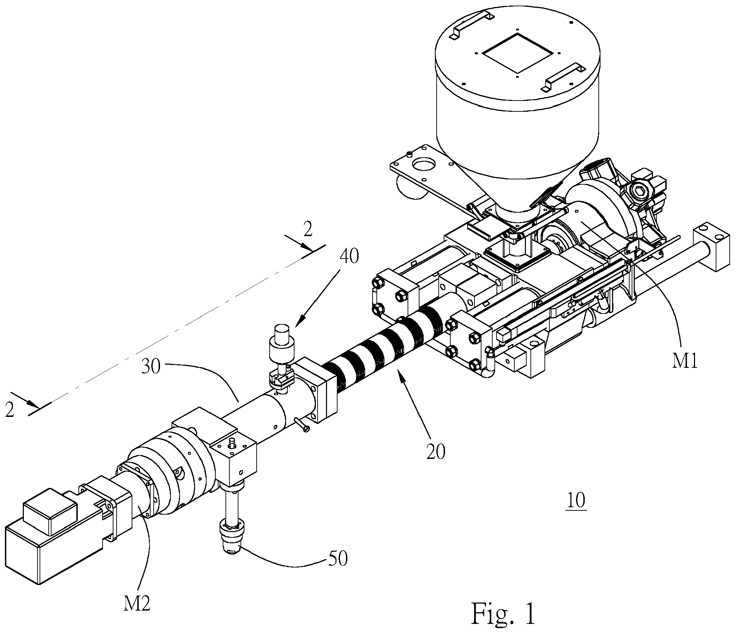

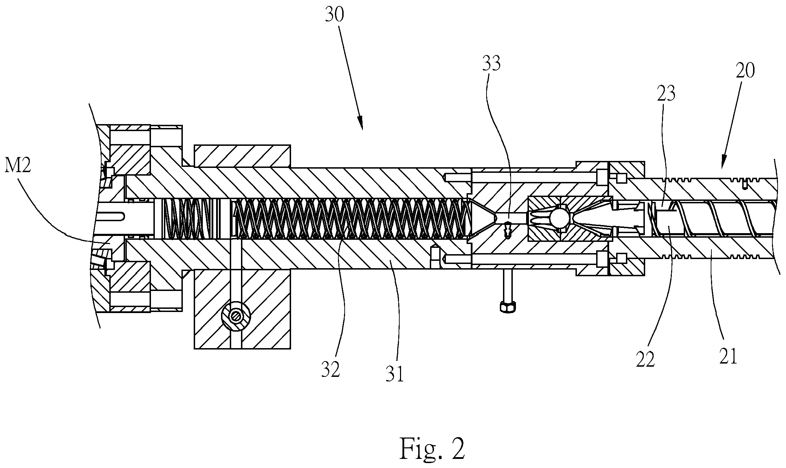

Please refer to FIGS. 1 and 2, a mixing system 10 provided in a preferred embodiment of the invention includes an extrusion unit 20, a mixing unit 30 and a foaming agent supply unit 40.

The extrusion unit 20 is a conventional technology used to melt a solid-state polymer raw material with thermal energy into a flowable fluid such as a molten fluid, structurally the extrusion unit 20 has a first tube 21 and a first screw 22 inserted into the first tube 21 coaxially, and a first flow path 23 with a space is defined between a peripheral side of the first screw 22 and an inner wall of the first tube 21 for the polymer raw material to pass through.

The mixing unit 30 has a second tube 31 and a second screw 32 inserted into the second tube 31 coaxially, a tube hole space of the second tube 31 not occupied by the second screw 32 is used to define a second flow path 33 for the polymer raw material to pass through, wherein the second tube 31 is coaxially connected in series with the first tube 21.

Specific technical content of the foaming agent supply unit 40 is a valve used to control passing through of fluid, and is disposed on the mixing unit 30 to introduce inert gas or carbon dioxide or other fluids existing in a supercritical state from the outside into the second flow path 33.

When the mixing system 10 is implemented, the solid-state polymer raw material enters the first flow path 23 through a hopper, and the first screw 22 is driven by an external power such as a motor (M1) to perform rotation movement with its own shaft as a spin axis in the first tube 21 to drive the polymer raw material to flow in a predetermined single direction in the first flow path 23. Under the action of thermal energy, the polymer raw material is melted into a flowable molten raw material fluid from solid-state, the molten raw material fluid continuously flows in downstream direction, and flows out of the first tube 21 at a first volume flow rate.

The molten raw material fluid flowing out of the first tube 21 at the first volume flow rate immediately enters the second flow path 23, and is mixed with the supercritical fluid that enters the second flow path 23 through the foaming agent supply unit 40 into a mixture.

Subsequently, the second screw 32 is driven by an external power of another motor (M2) to perform rotation movement with its own shaft as a spin axis in the second tube 31 to drive the mixture to flow in the second flow path 33 at a second volume flow rate, and the mixture is continuously stirred by the second screw 32 with the second flow path 33 used as a mixing space for mixing, so that the mixture becomes a single-phase solution.

The single-phase solution of the mixture can be transferred to a preset mold cavity space through a discharge end (50) connecting on the mixing unit 30, and then the supercritical fluid is used as a foaming agent to nucleate and foam in the mold cavity space to obtain a polymer foamed elastomer with a plurality of pores inside.

It should be specifically stated here that the second volume flow rate is greater than the first volume flow rate, so that when the molten raw material fluid enters the second flow path 33, upstream pressure of flowing of the raw material fluid is greater than or similar to downstream pressure to prevent flowing of the raw material fluid from being blocked and prevent pressure from rising to cause backflow. Wherein a technical means to make the second volume flow rate greater than the first volume flow rate in this embodiment is carried out by making a rotation speed of the second screw 32 greater than a rotation speed of the first screw 22 to increase a volume flow rate of the raw material fluid in the second flow path 33 to achieve the above-mentioned efficacy.

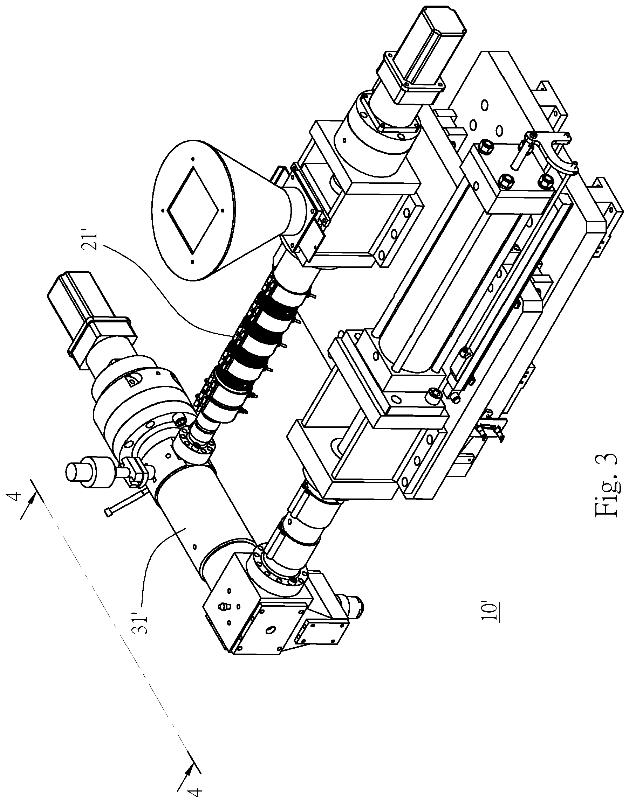

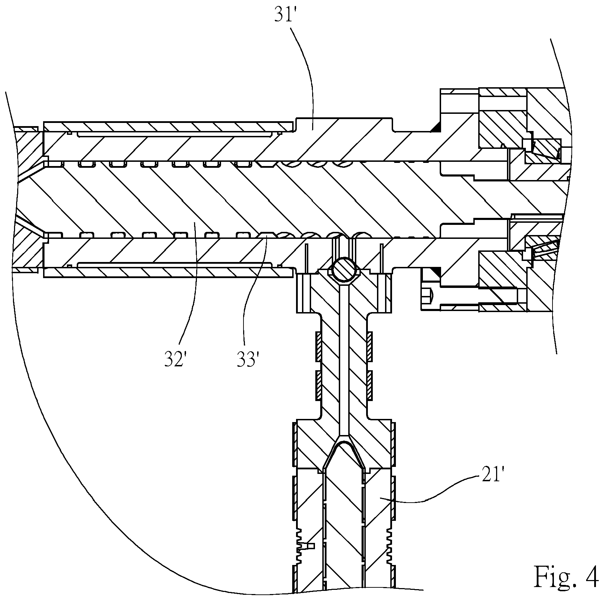

Please refer to FIGS. 3 and 4 for a mixing system 10' provided in another preferred embodiment of the invention with the same main technical features as those disclosed in the previous embodiment, by making the first volume flow rate of the raw material fluid at upstream smaller than the second volume flow rate at downstream when mixing with the foaming agent, thereby avoiding the occurrence of backflow of the raw material fluid.

The differences between this embodiment and the previous embodiment lie in the differences in the components. Specifically, in this embodiment, a second tube 31' is orthogonally combined with a first tube 21', and a space between a peripheral side of a second screw 32' and an inner wall of the second tube 31' is defined as a second flow path 33'; however, such differences do not affect the components achieving the object and efficacy of the invention.

It should be emphasized that besides the rotation speeds mentioned in the previous two embodiments as the technical means used to achieve the difference between the upstream volume flow rate and the downstream volume flow rate when mixing the raw material fluid with the foaming agent, the difference can also be achieved by means of changing a cross-sectional area of the flow path, such as changing or adjusting an inner diameter of the tube, a diameter of the screw, a pitch of the screw, a screw thread depth, a screw thread angle or a screw thread thickness, all of which are technical means that can be used and are included in the scope of the invention that should be protected.

It is to be understood that the above description is only preferred embodiments of the present invention and is not used to limit the present invention, and changes in accordance with the concepts of the present invention may be made without departing from the spirit of the present invention, for example, the equivalent effects produced by various transformations, variations, modifications and applications made to the configurations or arrangements shall still fall within the scope covered by the appended claims of the present invention.

## Claims

1. A mixing method comprising following steps of:
melting a solid-state polymer raw material into a flowable molten raw material fluid to flow into a mixing space at a first volume flow rate;
introducing a foaming agent in a fluid form into the mixing space; and
mixing the foaming agent with the molten raw material fluid into a mixture in the mixing space, and circulating the mixture in the mixing space at a second volume flow rate,
wherein the second volume flow rate is greater than the first volume flow rate.

2. The mixing method as claimed in claim 1, wherein the foaming agent is a gas in a supercritical state.

3. The mixing method as claimed in claim 1, wherein the mixture is mixed into a single-phase solution while flowing in the mixing space.

4. A mixing system comprising:
a first flow path allowing a fluid to flow at a first volume flow rate; and
a second flow path allowing the fluid to flow at a second volume flow rate, the second volume flow rate being made to be greater than the first volume flow rate;
a solid-state polymer raw material being melted into a flowable molten raw material fluid in the first flow path; and
the molten raw material fluid leaving the first flow path and entering the second flow path at the first volume flow rate, a foaming agent fluid being introduced into the second flow path simultaneously or at a different time, so that the molten raw material fluid and the foaming agent being mixed to form a mixture, and the mixture being made to flow in the second flow path at the second volume flow rate.

5. The mixing system as claimed in claim 4, further comprising:
a first tube; and
a first screw inserted into the first tube coaxially and capable of rotating with its own shaft as a spin axis; and
the first flow path with a space being formed between a peripheral side of the first screw and an inner wall of the first tube.

6. The mixing system as claimed in claim 5, further comprising:
a second tube; and
a second screw inserted into the second tube coaxially and capable of rotating with its own shaft as a spin axis; and
the second flow path with a space being formed between a peripheral side of the second screw and an inner wall of the second tube.

7. The mixing system as claimed in claim 6, wherein a rotation speed of the second screw is greater than a rotation speed of the first screw.

8. The mixing system as claimed in claim 6, wherein an inner diameter of the second tube is greater than an inner diameter of the first tube.

9. The mixing system as claimed in claim 6, wherein a diameter of the second screw is smaller than a diameter of the first screw.

10. The mixing system as claimed in claim 6, wherein a pitch of the second screw is smaller than a pitch of the first screw.

11. The mixing system as claimed in claim 4, wherein a cross-sectional area of the second flow path is larger than a cross-sectional area of the first flow path.
